# EUROPEAN PATENT SPECIFICATION

(11) **EP 2 250 217 B1**
(45) Date of publication and mention of the grant of the patent: **18.07.2012**
(21) Application number: 09717249.8
(22) Date of filing: 09.03.2009
(51) Int. Cl.: C08K 3/04, C08K 7/06, C08K 7/24, C08K 5/42

(54) **FLAME RETARDANT POLYCARBONATE BASED COMPOSITION INCLUDING CARBON**
FLAMMHEMMENDE ZUSAMMENSETZUNG AUF DER BASIS VON POLYCARBONAT MIT KOHLENSTOFF
COMPOSITION IGNIFUGEANTE À BASE DE POLYCARBONATE COMPRENANT DU CARBONE

(30) Priority: 07.03.2008 US 34522 P; 20.01.2009 US 356337
(43) Date of publication of application: 17.11.2010
(73) Proprietor: SABIC Innovative Plastics IP B.V., 4612 PX Bergen op Zoom (NL)
(72) Inventor: LA CAMERA, Domenico, NL-4814 TT Breda (NL); BANFI, Biagio, I-22070 Rovello (IT)
(74) Representative: Delorme, Nicolas
(86) International application number: PCT/IB2009/050982
(87) International publication number: WO 2009/109948

(56) References cited:
- DATABASE WPI Week 200750 Thomson Scientific, London, GB; AN 2007-510158 XP002529914 & JP 2007 100023 A (TEIJIN KASEI LTD) 19 April 2007 (2007-04-19)
- DATABASE WPI Week 200679 Thomson Scientific, London, GB; AN 2006-771277 XP002529915 & JP 2006 273931 A (TEIJIN KASEI LTD) 12 October 2006 (2006-10-12)
- DATABASE WPI Week 200535 Thomson Scientific, London, GB; AN 2005-336548 XP002529916 & JP 2005 089637 A (MITSUBISHI GAS CHEM CO INC) 7 April 2005 (2005-04-07)

## Description

### FIELD OF THE INVENTION

The present invention relates to thermoplastic compositions, and in particular to thermoplastic compositions having improved flame retardancy, impact strength and/or moldability. The present invention also relates to methods of manufacturing these compositions and articles that include these compositions.

### BACKGROUND OF THE INVENTION

Polycarbonates are useful in the manufacture of articles and components for a wide range of applications, from automotive parts to electronic appliances. Because of their broad use, particularly in electronic applications, it is desirable to provide polycarbonates with flame retardancy. Many known flame retardant agents used with polycarbonates contain bromine and/or chlorine. Brominated and/or chlorinated flame retardant agents are less desirable because impurities and/or by-products arising from these agents can corrode the equipment associated with manufacture and use of the polycarbonates. Brominated and/or chlorinated flame retardant agents are also increasingly subject to regulator restriction.

Nonhalogenated flame retardants have been proposed for polycarbonates, including various fillers, phosphorus-containing compounds, and certain salts. It has been difficult to meet the strictest standards of flame retardancy using the foregoing flame retardants, however, without also using brominated and/or chlorinated flame retardants, particularly in thin samples.

Polycarbonate is also known to be high impact thermoplastic resin. However, polycarbonate is inherently flammable. Different additives are known to improve the flammability properties of polycarbonate. Some additives are commercially very valuable since they allow complying with stringent environmental legislations that restrict the use of substances containing chlorine and bromine. One potential class of these additives are the salts of sulfonic acid, particularly potassium perfluorobutane sulfonate (that can be represented with the following chemical formula CF3-CF₂-CF₂-CF2-SO₃- +K), also know as Rimar salt (RM salt), and potassium biphenyl sulfonate (that can be represented with the following chemical formula (C6H6)-SO-(C6H5)- SO₃- +K). The salts of sulfonic acids are sometimes not sufficient to give robust flame retardant properties to the formulation, and they are often used in combination with other additives. The combination of salts of sulfonic acid with other additives is called flame retardant package.

. For example it has been reported that the usage of talc, in combination with salt of sulfonic acid, enhances the flammability properties of the salts of sulfonic acids. However, talc has a strong negative effect on the impact resistance of the final composition. It is also known that poly(tetrafluoroethylene) (PTFE) can enhance flame retardant properties of salts of sulfonic acids blended in polycarbonate. However, the addition of PFTE increases the viscosity of the compound that, in turn, results in a reduced moldability.

Accordingly, it would be beneficial to provide a thermoplastic material that offers improved flame retardant characteristics while also providing impact strength and/or moldability characteristics that are comparable to a thermoplastic material having no flame retardant properties. It would also be beneficial to provide an article that includes a thermoplastic material that offers improved flame retardant characteristics while also providing impact strengths and/or moldability characteristics that are comparable to a thermoplastic material having no flame retardant properties. It would be further beneficial to provide a method of making a thermoplastic material that offers improved flame retardant characteristics while also providing impact strength and/or moldability characteristics that are comparable to a thermoplastic material having no flame retardant properties.

### BRIEF SUMMARY OF THE INVENTION

The present invention provides a thermoplastic composition according to anyone of claims 1 to 4 having improved flame retardancy, impact strength and/or moldability. The compositions of the present invention include a polycarbonate or polycarbonate blend resin, a non-brominated, non-chlorinated flame retardant package, a carbon-containing synergist, and an optional reinforcement filler, wherein the composition provides high impact resistance, improved flame retardant characteristics, and/or good processing during injection molding (i.e. moldability), while complying with regulations that restrict the use of halogenated materials. These compositions may be used in a variety of systems, for example, to injection-mold big or complex parts that are used in objects that are beneficially flame-resistant and/or do not break when an accidental impact occurs during usage or transportation.

Accordingly, in one aspect, it is disclosed a thermoplastic composition including a 30 to 99% by weight of a thermoplastic resin, 10% or less of a non-brominated, non-chlorinated flame retardant package that comprises a salt of sulfonic acid; and from 0.05 to 10% by weight of a carbon-containing synergist selected from carbon black, graphite, carbon nanotubes, exfoliated graphite or a combination including at least one of the foregoing carbon-containing synergists; wherein a molded sample of the thermoplastic composition is capable of achieving a flame rating of V0 at a thickness of 3.0 mm, when tested according to UL 94 standard.

In another aspect, the present invention provides a method of forming a thermoplastic composition according to anyone of claims 6 to 10.

In another aspect, it is disclosed a method of forming a thermoplastic composition including the steps of blending 30 to 99% by weight of a thermoplastic resin, 10% or less of a non-brominated, non-chlorinated flame retardant package that comprises a salt of sulfonic acid; and from 0.05 to 10% by weight of a carbon-containing synergist selected from carbon black, graphite, carbon nanotubes, exfoliated graphite or a combination including at least one of the foregoing carbon-containing synergists; wherein a molded sample of the thermoplastic composition is capable of achieving a flame rating of V0 at a thickness of 3.0 mm, when tested according to UL 94 standard.

In yet another aspect, the present invention provides an article of manufacture according to claim 5.

In yet another aspect, it is disclosed an article of manufacture that includes a composition including 30 to 99% by weight of a thermoplastic resin, 10% or less of a non-brominated, non-chlorinated flame retardant package that comprises a salt of sulfonic acid; and from 0.05 to 10% by weight of a carbon-containing synergist selected from carbon black, graphite, carbon nanotubes, exfoliated graphite or a combination including at least one of the foregoing carbon-containing synergists; wherein a molded sample of the thermoplastic composition is capable of achieving a flame rating of V0 at a thickness of 3.0 mm, when tested according to UL 94 standard.

### DETAILED DESCRIPTION OF THE INVENTION

The present invention is more particularly described in the following description and examples that are intended to be illustrative only since numerous modifications and variations therein will be apparent to those skilled in the art. As used in the specification and in the claims, the term "comprising" may include the embodiments "consisting of" and "consisting essentially of." All ranges disclosed herein are inclusive of the endpoints and are independently combinable. The endpoints of the ranges and any values disclosed herein are not limited to the precise range or value; they are sufficiently imprecise to include values approximating these ranges and/or values.

As used herein, approximating language may be applied to modify any quantitative representation that may vary without resulting in a change in the basic function to which it is related. Accordingly, a value modified by a term or terms, such as "about" and "substantially," may not be limited to the precise value specified, in some cases. In at least some instances, the approximating language may correspond to the precision of an instrument for measuring the value.

The present invention provides a thermoplastic formulation containing polycarbonate or polycarbonate blend resin that provides improved flame resistance, high impact resistance, good processing during injection molding (i.e. mold-ability), while complying with regulations that restrict the use of halogenated materials. Contrary to most prior art materials, the compositions of the present invention do not suffer with lesser impact strength and/or moldability. Such a formulation can be used, for example, to injection-mold big or complex parts that are used in objects that are beneficially flame-resistant and/or do not break when an accidental impact occurs during usage or transportation.

The present invention relates to a thermoplastic composition that is non-brominated, non-chlorinated flame retardant while offering good impact resistance and/or moldability. The present invention uses an additive that, when used in combination with a flame-retardant substance, such as, for example salts of sulfonic acid, or salts of sulfonic and PTFE, shows an improvement of the flame retardant properties. Although the mechanism is not understood, this synergistic effect enables the use of smaller amounts of the other flame retardant substances, which, in turn, results in a final compound that has, at the same time, improved flame retardant characteristics, and/or good moldability, and/or good impact resistance, since the negative effect on the composition of the other substances, present in the flame retardant package, are reduced In one embodiment, the additive that provides the synergistic effect is carbon black (CB).

The compositions of the present invention include a thermoplastic resin, a non-brominated, non-chlorinated flame retardant package and carbon black, and an optional reinforcing agent. It has been found that the addition of the carbon-containing synergist, such as carbon black, and the non-brominated, non-chlorinated flame retardant package to the thermoplastic composition acts to impart flame retardant characteristics to the composition as well as maintaining impact strength and sufficient viscosity to enable the compositions to be processed, such as in an injection molding system and/or method.

Accordingly, in one aspect, the thermoplastic compositions of the present invention include a thermoplastic resin that includes an organic polymer. The thermoplastic resin is selected as the base material for the composition. Examples of thermoplastic resins that may be used in the present invention include, but are not limited to, polycarbonate and polycarbonate blend resins.

Accordingly, in one embodiment, polycarbonates may be used as the thermoplastic material in the composition. Polycarbonates including aromatic carbonate chain units include compositions having structural units of the formula (I): 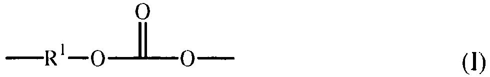 in which the R¹ groups are aromatic, aliphatic or alicyclic radicals. Beneficially, R¹ is an aromatic organic radical and, in an alternative embodiment, a radical of the formula (II):

-A¹-Y¹-A²- (II)

wherein each of A¹ and A² is a monocyclic divalent aryl radical and Y¹ is a bridging radical having zero, one, or two atoms which separate A¹ from A². In an exemplary embodiment, one atom separates A¹ from A². Illustrative examples of radicals of this type are -O-, -S-, - S(O)-, -S(O₂)-, -C(O)-, methylene, cyclohexyl-methylene, 2-[2,2,1]-bicycloheptylidene, ethylidene, isopropylidene, neopentylidene, cyclohexylidene, cyclopentadecylidene, cyclododecylidene, adamantylidene, or the like. In another embodiment, zero atoms separate A¹ from A², with an illustrative example being bisphenol. The bridging radical Y¹ can be a hydrocarbon group or a saturated hydrocarbon group such as methylene, cyclohexylidene or isopropylidene.

Polycarbonates may be produced by the Schotten-Bauman interfacial reaction of the carbonate precursor with dihydroxy compounds. Typically, an aqueous base such as sodium hydroxide, potassium hydroxide or calcium hydroxide is mixed with an organic, water immiscible solvent such as benzene, toluene, carbon disulfide, or dichloromethane, which contains the dihydroxy compound. A phase transfer agent is generally used to facilitate the reaction. Molecular weight regulators may be added either singly or in admixture to the reactant mixture. Branching agents, described forthwith may also be added singly or in admixture.

Polycarbonates can be produced by the interfacial reaction polymer precursors such as dihydroxy compounds in which only one atom separates A¹ and A². As used herein, the term "dihydroxy compound" includes, for example, bisphenol compounds having general formula (III) as follows: 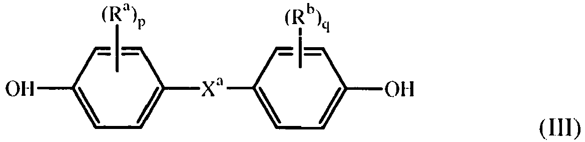 wherein R^{a} and R^{b} each independently represent hydrogen, a halogen atom, or a monovalent hydrocarbon group; p and q are each independently integers from 0 to 4; and X^{a} represents one of the groups of formula (IV): 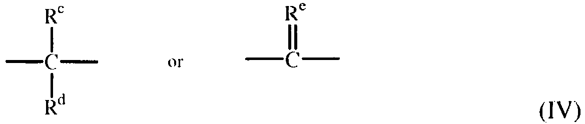 wherein R^{c} and R^{d} each independently represent a hydrogen atom or a monovalent linear or cyclic hydrocarbon group, and R^{e} is a divalent hydrocarbon group.

Examples of the types of bisphenol compounds that may be represented by formula (IV) include the bis(hydroxyaryl)alkane series such as, 1,1-bis(4-hydroxyphenyl)methane, 1,1-bis(4-hydroxyphenyl)ethane, 2,2-bis(4-hydroxyphenyl)propane (or bisphenol-A), 2,2-bis(4-hydroxyphenyl)butane, 2,2-bis(4-hydroxyphenyl)octane, 1,1-bis(4-hydroxyphenyl)propane, 1,1-bis(4-hydroxyphenyl)n-butane, bis(4-hydroxyphenyl)phenylmethane, 2,2-bis(4-hydroxy-1-methylphenyl)propane, 1,1-bis(4-hydroxy-t-butylphenyl)propane, 2,2-bis(4-hydroxy-3-bromophenyl)propane, or the like; bis(hydroxyaryl)cycloalkane series such as, 1,1-bis(4-hydroxyphenyl)cyclopentane or 1,1-bis(4-hydroxyphenyl)cyclohexane or combinations including at least one of the foregoing bisphenol compounds.

Other bisphenol compounds that may be represented by formula (III) include those where X is -O-, -S-, -SO- or -SO₂-. Some examples of such bisphenol compounds are bis(hydroxyaryl)ethers such as 4,4'-dihydroxy diphenylether, 4,4'-dihydroxy-3,3'-dimethylphenyl ether, or the like; bis(hydroxy diaryl)sulfides, such as 4,4'-dihydroxy diphenyl sulfide, 4,4'-dihydroxy-3,3'-dimethyl diphenyl sulfide, or the like; bis(hydroxy diaryl) sulfoxides, such as, 4,4'-dihydroxy diphenyl sulfoxides, 4,4'-dihydroxy-3,3'-dimethyl diphenyl sulfoxides, or the like; bis(hydroxy diaryl)sulfones, such as 4,4'-dihydroxy diphenyl sulfone or 4,4'-dihydroxy-3,3'-dimethyl diphenyl sulfone ; or combinations including at least one of the foregoing bisphenol compounds.

Other bisphenol compounds that may be utilized in the polycondensation of polycarbonate are represented by the formula (V) 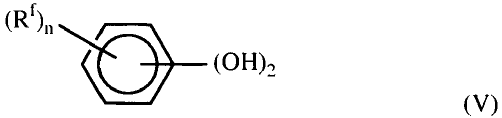 wherein, R^{f}, is a halogen atom of a hydrocarbon group having 1 to 10 carbon atoms or a halogen substituted hydrocarbon group; n is a value from 0 to 4. When n is at least 2, R^{f} may be the same or different. Examples of bisphenol compounds that may be represented by the formula (IV), are resorcinol, substituted resorcinol compounds such as 3-methyl resorcin, 3-ethyl resorcin, 3-propyl resorcin, 3-butyl resorcin, 3-t-butyl resorcin, 3-phenyl resorcin, 3-cumyl resorcin, 2,3,4,6-tetrafloro resorcin, 2,3,4,6-tetrabromo resorcin, or the like; catechol, hydroquinone, substituted hydroquinones, such as 3-methyl hydroquinone, 3-ethyl hydroquinone, 3-propyl hydroquinone, 3-butyl hydroquinone, 3-t-butyl hydroquinone, 3-phenyl hydroquinone, 3-cumyl hydroquinone, 2,3,5,6-tetramethyl hydroquinone, 2,3,5,6-tetra-t-butyl hydroquinone, 2,3,5,6-tetrafloro hydroquinone or 2,3,5,6-tetrabromo hydroquinone ; or combinations including at least one of the foregoing bisphenol compounds.

Bisphenol compounds such as 2,2, 2', 2'- tetrahydro-3, 3, 3', 3'- tetramethyl-1, l'-spirobi-[IH-indene]-6, 6'- diol represented by the following formula (VI) may also be used.

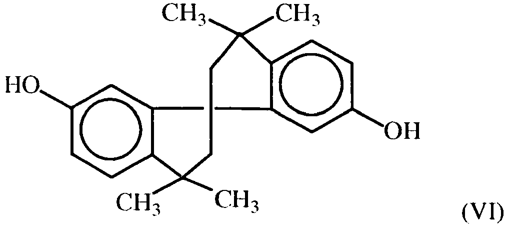

In one embodiment, the bisphenol compound is bisphenol A.

Typical carbonate precursors include the carbonyl halides, for example carbonyl chloride (phosgene), and carbonyl bromide; the bis-haloformates, for example, the bis-haloformates of dihydric phenols such as bisphenol A or hydroquinone, and the bis-haloformates of glycols such as ethylene glycol and neopentyl glycol; and the diaryl carbonates, such as diphenyl carbonate, di(tolyl) carbonate, and di(naphthyl) carbonate. In one embodiment, the carbonate precursor for the interfacial reaction is carbonyl chloride.

It is also possible to employ polycarbonates resulting from the polymerization of two or more different dihydric phenols or a copolymer of a dihydric phenol with a glycol or with a hydroxy- or acid-terminated polyester or with a dibasic acid or with a hydroxy acid or with an aliphatic diacid in the event a carbonate copolymer rather than a homopolymer is selected for use. Generally, useful aliphatic diacids have about 2 to about 40 carbons. A beneficial aliphatic diacid is dodecanedioic acid.

Branched polycarbonates, as well as blends of linear polycarbonate and a branched polycarbonate may also be used in the composition. The branched polycarbonates may be prepared by adding a branching agent during polymerization. These branching agents may comprise polyfunctional organic compounds containing at least three functional groups, which may be hydroxyl, carboxyl, carboxylic anhydride, haloformyl, and combinations including at least one of the foregoing branching agents. Specific examples include trimellitic acid, trimellitic anhydride, trimellitic trichloride, tris-p-hydroxy phenyl ethane, isatin-bis-phenol, tris-phenol TC (1,3,5-tris((p-hydioxyphenyl)isopiopyl)benzene), tris-phenol PA (4(4(1,1-bis(p-hydroxyphenyl)-ethyl) α,α-dimethyl benzyl)phenol), 4-chloroformyl phthalic anhydride, trimesic acid or benzophenone tetracarboxylic acid or combinations including at least one of the foregoing branching agents. The branching agents may be added at a level of about 0.05 to about 2.0 weight percent (wt%), based upon the total weight of the polycarbonate in a given layer.

In one embodiment, the polycarbonate may be produced by a melt polycondensation reaction between a dihydroxy compound and a carbonic acid diester. Examples of the carbonic acid diesters that may be utilized to produce the polycarbonates are diphenyl carbonate, bis(2,4-dichlorophenyl)canbonate, bis(2,4,6-trichlorophenyl) carbonate, bis(2-cyanophenyl) carbonate, bis(o-nitiophenyl) carbonate, ditolyl carbonate, m-cresyl carbonate, dinaphthyl carbonate, bis(diphenyl) carbonate, bis (methylsalicyl)carbonate, diethyl carbonate, dimethyl carbonate, dibutyl carbonate or dicyclohexyl carbonate or combinations including at least one of the foregoing carbonic acid diesters. In one embodiment, the carbonic acid diester is diphenyl carbonate or bis (methylsalicyl)carbonate.

Beneficially, the number average molecular weight of the polycarbonate is 3,000 to 1,000,000 grams/mole (g/mole). Within this range, it is beneficial to have a number average molecular weight of greater than or equal to 10,000 in one embodiment, greater than or equal to 20,000 in another embodiment, and greater than or equal to 25,000 g/mole in yet another embodiment. Also beneficial is a number average molecular weight of less than or equal to 100,000 in one embodiment, less than or equal to 75,000 in an alternative embodiment, less than or equal to 50,000 in still another alternative embodiment, and less than or equal to 35, 000 g/mole in yet another alternative embodiment.

The amount of the thermoplastic resin added to the thermoplastic compositions of the present invention may be based on the selected properties of the thermoplastic compositions as well as molded articles made from these compositions. Other factors include the amount and/or type of flame retardant used, the amount and/or type of flame retardant used, the amount and/or type of reinforcing agent used, and/or the amount and presence of other components in the thermoplastic compositions. In one embodiment, the thermoplastic resin is present in amounts of from 30 to 99 wt.%. In another embodiment, the thermoplastic resin is present in amounts from 50 to 99 wt.%. In still another embodiment, the thermoplastic resin is present in amounts from 60 to 80 wt.%.

In addition to the thermoplastic resin, the compositions of the present invention also include a non-brominated, non-chlorinated flame retardant package that contains a salt of sulfonic acid. As discussed, the flame retardant package provides flame retardant characteristics to the compositions of the present invention as well as any articles made using these compositions. In addition the flame retardant package is selected such that, when the carbon-containing synergist is added, the thermoplastic compositions may be used to form flame retardant articles that pass the UL94 vertical bum tests, in particular the UL94 V0 rating, which is more stringent than the UL94 V1 rating, which is in turn more stringent then the UL94 V2 rating. In addition, it is worth mentioning that the lower the thickness of the sample the more difficult is to reach a certain flame retardant rating. Thin articles present a particular challenge in the UL 94 tests, because compositions suitable for the manufacture of thin articles have to have a higher flow. In the present invention, since the synergist enhances the flame retardant characteristics, lower amounts of flame retardant package are required to still achieve better flame retardant ratings. And since many flame retardants can have a negative effect on the flow of the composition, the use of the synergist helps to provide compositions capable of meeting the UL94 V0 standard while also being easier to process.

In one embodiment, the compositions of the present invention use a flame retardant package. The flame retardant package includes a salt of sulfonic acid in combination with other components. Additional components that are included with the salt of sulfonic acid are talc, PTFE, or a combination including both talc and PTFE.

Samples made from the thermoplastic compositions of the present invention have very good flame retardant characteristics, as determined using the UL 94 testing standard. Using this standard, the thermoplastic compositions are formed into a molded article having a given thickness. In one embodiment, a molded sample of the thermoplastic composition is capable of achieving UL94 V0 rating at a thickness of 3.0 mm (± 10%). In an alternative embodiment, a molded sample of the thermoplastic composition is capable of achieving UL94 V0 or V1 rating at a thickness of 1.5 mm (± 10%). In yet another embodiment, a molded sample of the thermoplastic composition is capable of achieving UL94 V0 or V1 rating at a thickness of 1.2 mm (± 10%). In still another embodiment, a molded sample of the thermoplastic composition is capable of achieving UL94 V0 or V1 rating at a thickness of 1.0 mm (± 10%).

The amount of the flame retardant package added to the thermoplastic compositions of the present invention may be based on the selected properties of the thermoplastic compositions as well as molded articles made from these compositions. Other factors include the amount and/or type of thermoplastic resin used, the amount and/or type of flame retardant used, the amount and/or type of reinforcing agent used, the amount, and/or the amount and presence of other components in the thermoplastic compositions. However, as discussed, certain components that may be used in flame retardant packages can negatively impact selected characteristics of the composition. For example, talc can have a negative impact on impact characteristics while PTFE can have a negative impact on viscosity (and therefore moldability). As a result, using lower amounts of the flame retardant package can help maintain selected physical parameters even though the resulting compositions may not have as good flame retardant characteristics since less flame retardant is used. However, good flame retardant characteristics can be still achieved due to the synergistic benefits of the carbon black on the flame retardant characteristics of the composition. Accordingly, in one embodiment, the flame retardant package is present in amounts of from 0.01 to 10 wt.%. In another embodiment, the flame retardant package is present in amounts from 0.05 to 5 wt.%. In still another embodiment, the flame retardant package is present in amounts from 0.1 to 3 wt.%. All weight percents are based on the total weight of the thermoplastic composition.

In addition to the thermoplastic resin and the salt of sulfonic acid-based flame retardant package, the thermoplastic compositions of the present invention include a carbon-containing synergist, such as carbon black, graphite, exfoliated graphite, carbon nanotubes or combinations thereof. The flame retardant properties of the composition, containing the carbon based substances and the flame retardants package, are enhanced. This allows using a minor quantity of flame retardants package, and in turn permits to obtain a final compound that has, at the same time, improved reduced flammability, good mould-ability and/or good impact resistance.

Accordingly, due to the use of the carbon-containing synergist and the flame retardant package, a molded sample of the thermoplastic composition is capable of achieving a flame rating of V0 at a thickness of 3.0 mm, when tested according to UL 94 standard. As used herein, "capable of achieving a flame rating" means that the composition exhibits a probability of first time pass ("p(FTP)") of 0.900 or higher. This means that the molded sample will be predicted to pass a given UL 94 rating 90% of the time or greater. p(FTP) may be calculated according to the methods disclosed in U.S. Patent No. 6,308,142. In an alternative embodiment, a molded sample of the thermoplastic composition is capable of achieving a flame rating of V0 or V1 at a thickness of 1.5 mm, when tested according to the UL 94 standard.

In one embodiment, the carbon-containing synergist is carbon black and is added in pure form. In another embodiment, the carbon-containing synergist is carbon black that is added to the compound in form of masterbatch. In another embodiment, the masterbatch contains 50% CB and 50 % of ethylene vinyl acetate copolymer (EVA). While the EVA may be flammable, it is noted that the reduced amounts of the flame retardant are still capable of forming a flame retardant composition.

The amount of carbon-containing synergist added, either alone or a part of a masterbatch, is sufficient to help enable dispersion of the flame retardant and any inorganic fillers while also helping to ensure the selected characteristics of the thermoplastic composition are achieved. It is disclosed that, the amount of carbon-containing synergist added is from 0.05 to 10 % by weight of the total weight of the composition. It is disclosed that, the amount of carbon-containing synergist added is from 0.1 to 5 % by weight of the total weight of the composition. The amount of carbon-containing synergist added is from 0.05 to 3 % by weight of the total weight of the composition.

By using lower amounts of the flame retardant package, the detrimental effects of the flame retardants on the mechanical properties of the compositions may be minimized, while still maintaining excellent flame retardant properties due to use of the carbon-containing synergist. As a result, the compositions of the present invention, in one embodiment, have an unnotched Izod impact strength, as measured using ISO 180, that is at least 90% of the impact strength of a composition that does not contain the flame retardant package. In another embodiment, the compositions of the present invention have an unnotched Izod impact strength, as measured using ISO 180, that is at least 95% of the impact strength of a composition that does not contain the flame retardant package.

In alternative embodiments, the compositions of the present invention optionally include a reinforcing agent. Suitable fillers or reinforcing agents include, for example, fibers, such as asbestos or carbon fibers ; silicates and silica powders, such as aluminum silicate (mullite), synthetic calcium silicate, zirconium silicate, fused silica, crystalline silica graphite or natural silica sand ; boron powders such as boron-nitride powder or boron-silicate powders ; alumina; magnesium oxide (magnesia); calcium sulfate (as its anhydride, dihydrate or trihydrate); calcium carbonates such as chalk, limestone, marble or synthetic precipitated calcium carbonates; wollastonite; surface-treated wollastonite; glass spheres such as hollow and solid glass spheres, silicate spheres, cenospheres or aluminosilicate (armospheres) kaolin, including hard kaolin, soft kaolin, calcined kaolin, kaolin including various coatings known in the art to facilitate compatibility with the polymeric matrix resin ; single crystal fibers or "whiskers" such as silicon carbide, alumina, boron carbide, iron, nickel, copper, or the like; glass fibers, (including continuous and chopped fibers), such as E, A, C, ECR, R, S, D, or NE glasses and quartz ; sulfides such as molybdenum sulfide, zinc sulfide or the like; barium compounds such as barium titanate, barium ferrite, barium sulfate or heavy spar ; metals and metal oxides such as particulate or fibrous aluminum, bronze, zinc, copper or nickel ; flaked fillers such as glass flakes, flaked silicon carbide, aluminum diboride, aluminum flakes or steel flakes; fibrous fillers, for example short inorganic fibers such as those derived from blends including at least one of aluminum silicates, aluminum oxides, magnesium oxides or calcium sulfate hemihydrate ; natural fillers and reinforcements, such as wood flour obtained by pulverizing wood, fibrous products such as cellulose, cotton, sisal, jute, starch, cork flour, lignin, ground nut shells, corn of rice grain husks, reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic resins or poly(vinyl alcohol) ; as well as additional fillers and reinforcing agents such as mica, clay, feldspar, flue dust, fillite, quartz, quartzite, perlite, tripoli, diatomaceous earth or carbon black or combinations including at least one of the foregoing fillers or reinforcing agents.

The fillers and reinforcing agents may be surface treated with silanes to improve adhesion and dispersion with the polymeric matrix resin. In addition, the reinforcing tillers may be provided in the form of monofilament or multifilament fibers and may be used either alone or in combination with other types of liber, through, for example, co-weaving or core/sheath, side-by-side, orange-type or matrix and fibril constructions, or by other methods known to one skilled in the art of fiber manufacture. Suitable cowoven structures include, for example, glass fiber-carbon fiber, carbon fiber-aromatic polyimide (aramid) fiber, and aromatic polyimide or fiberglass fiber. Fibrous fillers may be supplied in the form of, for example, rovings, woven fibrous reinforcements or such as 0-90 degree fabrics ; non-woven fibrous reinforcements such as continuous strand mat, chopped strand mat, tissues, papers pr felts ; or three-dimensional reinforcements such as braids.

The amount of reinforcing agent used in the thermoplastic composition is dependent on one more factors including the thermoplastic resin used, the type of flame retardant used, and/or the presence of any other additives or fillers. In one embodiment, the amount of reinforcing agent added is from 0.5 to 60% by weight of the thermoplastic composition. In another embodiment, the amount of reinforcing agent added is from 5 to 50% by weight of the thermoplastic composition. In still another embodiment, the amount of reinforcing agent added is from 10 to 40% by weight of the thermoplastic composition.

The thermoplastic compositions of the present invention are essentially free of chlorine and bromine, particularly chlorine and bromine flame-retardants. "Essentially free of chlorine and bromine" as used herein refers to materials produced without the intentional addition of chlorine, bromine, and/or chlorine or bromine containing materials. It is understood however that in facilities that process multiple products a certain amount of cross contamination can occur resulting in bromine and/or chlorine levels typically on the parts per million by weight scale. With this understanding it can be readily appreciated that essentially free of bromine and chlorine may be defined as having a bromine and/or chlorine content of less than or equal to 100 parts per million by weight (ppm), less than or equal to 75 ppm, or less than or equal to 50 ppm. When this definition is applied to the fire retardant it is based on the total weight of the fire retardant. When this definition is applied to the thermoplastic composition it is based on the total weight of the thermoplastic resin, the inorganic filler, the flame retardant, and carbon fiber.

In addition to the thermoplastic resin, flame retardant, the optional inorganic filler and the carbon-containing synergist, the thermoplastic compositions of the present invention may include various additives ordinarily incorporated in resin compositions of this type. Mixtures of additives may be used. Such additives may be mixed at a suitable time during the mixing of the components for forming the composition. The one or more additives are included in the thermoplastic compositions to impart one or more selected characteristics to the thermoplastic compositions and any molded article made therefrom. Examples of additives that may be included in the present invention include, but are not limited to, heat stabilizers, process stabilizers, antioxidants, light stabilizers, plasticizers, antistatic agents, mold releasing agents, UV absorbers, lubricants, pigments, dyes, colorants, flow promoters or a combination of one or more of the foregoing additives.

Suitable heat stabilizers include, for example, organo phosphites such as triphenyl phosphite, tris-(2,6-dimethylphenyl)phosphite or tris-(mixed mono-and dinoynylphenyl)phosphite ; phosphonates such as dimethylbenzene phosphonate , phosphates such as trimethyl phosphate, or combinations including at least one of the foregoing heat stabilizers. Heat stabilizers are generally used in amounts of from 0.01 to 0.5 parts by weight based on 100 parts by weight of the total composition, excluding any filler.

Suitable antioxidants include, for example, organophosphites such as tris(nonyl phenyl)phosphite, tris(2,4-di-t-butylphenyl)phosphite, bis(2,4-di-t-butylphenyl)pentaerythritol diphosphite or distearyl pentaerythritol diphosphite ; alkylated monophenols or polyphenols; alkylated reaction products of polyphenols with dienes, such as tetrakis[methylene(3,5-di-tert-butyl-4-hydroxyhydrocinnamate)] methane ; butylated reaction products of para-cresol or dicyclopentadiene; alkylated hydroquinones; hydroxylated thiodiphenyl ethers; alkylidene-hisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-hutyl-4-hydroxyphenyl)propionate or pentaerythrityl-tetrakis[3-(3,5-di-tert-butyl-4-hydroxyphenyl)propionate ; amides of beta-(3,5-di-tert-butyl-4-hydroxyphenyl)-propionic acid or combinations including at least one of the foregoing antioxidants. Antioxidants are generally used in amounts of from 0.01 to 0.5 parts by weight, based on 100 parts by weight of the total composition, excluding any filler.

Suitable light stabilizers include, for example, benzotriazoles such as 2-(2-hydroxy-5-methylphenyl)benzotriazole, 2-(2-hydroxy-5-tert-octylphenyl)-benzotriazole or 2-hydroxy-4-n-octoxy benzopbenone or combinations including at least one of the foregoing light stabilizers. Light stabilizers are generally used in amounts of from 0.1 to 1.0 parts by weight, based on 100 parts by weight of the total composition, excluding any filler.

Suitable plasticizers include, for example, phthalic acid esters such as dioctyl-4,5-epoxy-hexahydrophthalate, tris-(octoxycarbonylethyl)isocyanurate, tristearin or epoxidized soybean oil or combinations including at least one of the foregoing plasticizers. Plasticizers are generally used in amounts of from 0.5 to 3.0 parts by weight, based on 100 parts by weight of the total composition, excluding any filler.

Suitable antistatic agents include, for example, glycerol monostearate, sodium stearyl sulfonate or sodium dodecylbenzenesulfonate or combinations of the foregoing antistatic agents. In one embodiment, carbon fibers, carbon nanofibers, carbon nanotubes, carbon black, or any combination of the foregoing may be used in a polymeric resin containing chemical antistatic agents to render the composition electrostatically dissipative.

Suitable mold releasing agents include for example, metal stearate, stearyl stearate, pentaerythritol tetrastearate, beeswax, montan wax or paraffin wax or combinations including at least one of the foregoing mold release agents. Mold releasing agents are generally used in amounts of from 0. 1 to 1.0 parts by weight, based on 100 parts by weight of the total composition, excluding any filler.

Suitable UV absorbers include for example, hydroxybenzophenones; hydroxybenzotriazoles; hydroxybenzotriazines; cyanoacrylates; oxanilides; benzoxazinones; 2-(2H-benzotriazol-2-yl)-4-(1,1,3,3-tetramethylbutyl)-phenol (CYASORB™ 5411); 2-hydroxy-4-n-octyloxybenzophenone (CYASORB™ 531); 2-[4,6-bis(2,4-dimethylphenyl)-1,3,5-triazin-2-yl]- 5-(octyloxy)-phenol (CYASORB™ 1164); 2,2'-(1,4- phenylene)bis(4H-3,1-benzoxazin-4-one) (CYASORB™ UV- 3638); 1,3-bis[(2-cyano-3,3-diphenylacryloyl)oxy]-2,2-bis[[(2-cyano-3, 3-diphenylacryloyl)oxy]methyl]propane (UVINUL™ 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium oxide, and zinc oxide, all with particle size less than 100 nanometers; or combinations including at least one of the foregoing UV absorbers. UV absorbers are generally used in amounts of from 0.01 to 3.0 parts by weight, based on 100 parts by weight based on 100 parts by weight of the total composition, excluding any filler.

Suitable lubricants include for example, fatty acid esters such as alkyl stearyl esters, e.g., methyl stearate ; mixtures of methyl stearate and hydrophilic and hydrophobic surfactants including polyethylene glycol polymers, polypropylene glycol polymers, and copolymers thereof e.g., methyl stearate and polyethylene-polypropylene glycol copolymers in a suitable solvent; or combinations including at least one of the foregoing lubricants. Lubricants are generally used in amounts of from 0. to 5 parts by weight, based on 100 parts by weight of the total composition, excluding any filler.

Suitable pigments include for example, inorganic pigments such as metal oxides and mixed metal oxides such as zinc oxide, titanium dioxides or iron oxides sulfides such as zinc sulfides ; aluminates; sodium sulfo-silicates; sulfates and chromates; zinc ferrites; ultramarine blue; Pigment Brown 24; Pigment Red 101; Pigment Yellow 119; organic pigments such as azos, di-azos, quinacridones, perylenes, naphthalene tetracarboxylic acids, flavanthrones, isoindolinones, tetrachloroisoindolinones, anthraquinones, anthanthrones, dioxazines, phthalocyanines, and azo lakes; Pigment Blue 60, Pigment Red 122, Pigment Red 149, Pigment Red 177, Pigment Red 179, Pigment Red 202, Pigment Violet 29, Pigment Blue 15, Pigment Green 7, Pigment Yellow 147 and Pigment Yellow 150, or combinations including at least one of the foregoing pigments. Pigments are generally used in amounts of from 1 to 10 parts by weight, based on 100 parts by weight based on 100 parts by weight of the total composition, excluding any filler.

Suitable dyes include, for example, organic dyes such as coumarin 460 (blue), coumarin 6 (green) or nile red ; lanthanide complexes; hydrocarbon and substituted hydrocarbon dyes; polycyclic aromatic hydrocarbons; scintillation dyes (preferably oxazoles and oxadiazoles); aryl- or heteroaryl-substituted poly (2-8 olefins); carbocyanine dyes; phthalocyanine dyes and pigments; oxazine dyes; carbostyryl dyes; porphyrin dyes; acridine dyes; anthraquinone dyes; arylmethane dyes; azo dyes; diazonium dyes; nitro dyes; quinone imine dyes; tetrazolium dyes; thiazole dyes; perylene dyes, perinone dyes; bis-benzoxazolylthiophene (BBOT); and xanthene dyes; fluorophores such as anti- stokes shift dyes which absorb in the near infrared wavelength and emit in the visible wavelength ; luminescent dyes such as 5-amino-9-diethyliminobenzo(a)phenoxazonium perchlorate; 7-amino-4-methylcarbostyryl; 7-amino-4-methylcoumarin; 3-(2'-benzimidazolyl)-7-N,N-diethylaminocoumarin; 3-(2'-benzothiazolyl)-7-diethylaminocoumarin; 2-(4-biphenylyl)-5-(4-t-butylphenyl)-1,3,4-oxadiazole; 2-(4-biphenyl-6-phenylbenzoxazole-1,3; 2,5-Bis-(4-biphenylyl)-1,3,4-oxadiazole; 2,5-bis-(4-biphenylyl)-oxazole; 4,4'-bis-(2-butyloctyloxy)-p-quateiphenyl; p-bis(o-methylstyryl)-benzene; 5,9-diaminobenzo(a)phenoxazonium perchlorate; 4-dicyanomethylene-2-methyl-6-(p-dimethylaminostyryl-yl)-4H-pyran; 1,1'-diethyl-2,2'-carbocyanine iodide; 3,3'-diethyl-4,4',5,5'-dibenzothiatricarbocyanine iodide; 7-diethylamino-4-methylcoumarin; 7-diethylamino-4-trilluoromethylcoumarin; 2,2'-dimethyl-p-quaterphenyl; 2,2-dimethyl-p-terphenyl; 7-ethylamino-6-methyl-4-trifluoromethylcoumarin; 7-ethylamino-4-trifluoromethylcoumarin; nile red; rhodamine 700; oxazine 750; rhodamine 800; IR 125; IR 144; IR 140; IR 132; IR 26; IR5; diphenylhexatriene; diphenylbutadiene; tetraphenylbutadiene; naphthalene; anthracene; 9,10-diphenylanthracene; pyrene; chrysene; rubrene; coronene; phenanthrene or combinations including at least one of the foregoing dyes. Dyes are generally used in amounts of from 0.1 to 5 parts by weight, based on 100 parts by weight of the total composition, excluding any filler.

Suitable colorants include, for example titanium dioxide, anthraquinones, perylenes, perinones, indanthrones, quinacridones, xanthenes, oxazines, oxazolines, thioxanthenes, indigoids, thioindigoids, naphthalimides, cyanines, xanthenes, methines, lactones, coumarins, bis-benzoxazolylthiophene (BBOT), napthalenetetracarboxylic derivatives, monoazo and disazo pigments, triarylmethanes, aminoketones, bis(styryl)biphenyl derivatives, as well as combinations including at least one of the foregoing colorants. Colorants are generally used in amounts of from 0.1 to 5 parts by weight, based on 100 parts by weight of the total composition, excluding any filler.

Suitable blowing agents include for example, low boiling halohydrocarbons and those that generate carbon dioxide; blowing agents that are solid at room temperature and when heated to temperatures higher than their decomposition temperature, generate gases such as nitrogen, carbon dioxide, ammonia gas, such as azodicarbonamide, metal salts of azodicarbonamide, 4,4' oxybis(benzencsulfonylhydrazide), sodium bicarbonate, ammonium carbonate, or combinations including at least one of the foregoing blowing agents. Blowing agents are generally used in amounts of from 1 to 20 parts by weight, based on 100 parts by weight of the total composition, excluding any filler.

Additionally, materials to improve flow and other properties may be added to the composition, such as low molecular weight hydrocarbon resins. Particularly useful classes of low molecular weight hydrocarbon resins are those derived from petroleum C₅ to C₉ feedstock that are derived from unsaturated C₅ to C₉ monomers obtained from petroleum cracking. Non-limiting examples include olefins, e.g. pentenes, hexenes, heptenes and the like; diolefins, e.g. pentadienes, hexadienes and the like; cyclic olefins and diolefins, e.g. cyclopentene, cyclopentadiene, cyclohexene, cyclohexadiene, methyl cyclopentadiene and the like; cyclic diolefin dienes, e.g., dicyclopentadiene, methylcyclopentadiene dimer and the like; and aromatic hydrocarbons, e.g. vinyltoluenes, indenes, methylindenes and the like. The resins can additionally be partially or fully hydrogenated.

The thermoplastic compositions of the present invention may be formed using any known method of dispersing one or more fillers in a thermoplastic resin. In one embodiment, the thermoplastic resin has a sufficient molecular weight to enable the fillers to be dispersed in the thermoplastic resin using an extrusion process. When an extrusion process is used, it has been discovered that higher process speeds provide generally better dispersion of the fillers in the thermoplastic resin.

In one embodiment, the components are first blended in a high speed mixer. Other low shear processes including but not limited to hand mixing may also accomplish this blending. The blend is then fed into the throat of a twin-screw extruder via a hopper. Alternatively, one or more of the components may be incorporated into the composition by feeding directly into the extruder at the throat and/or downstream through a sidestuffer. Such additives may also be compounded into a masterbatch with a desired polymeric resin and fed into the extruder. The extruder is generally operated at a temperature higher than that necessary to cause the composition to flow. The extrudate is immediately quenched in a water batch and pelletized. The pellets so prepared when cutting the extrudate may be one-fourth inch long or less as desired. Such pellets may be used for subsequent molding, shaping, or forming.

Shaped, formed, or molded articles including the thermoplastic compositions are also provided. The thermoplastic compositions can he molded into useful shaped articles by a variety of means such as injection molding, extrusion, rotational molding, blow molding and thermoforming to form articles. Due to the ability of the articles to be electrostatically painted as well as providing excellent physical properties, the articles are especially useful as metal replacements in a variety of electronic and automotive applications, as well as other applications.

Examples of articles that may be made using the compositions of the present invention include, but are not limited to, computer and business machine housings such as housings for monitors, hand held electronic device housings such as housings for cell phones, electrical connectors, and components of lighting fixtures, ornaments, home appliances, roofs, greenhouses, sun rooms, swimming pool enclosures, and the like. The above-described compositions are of particular utility in the manufacture of articles including a minimum wall thickness of as low as 0.1 mm, 0.5 mm, 1.0 mm, or 2.0 mm (each ± 10%), although with thinner walls, flame retardancy may be affected. The above-described compositions are also of particular utility in the manufacture of articles including a minimum wall thickness of 2.25 to 2.90 mm (each ± 10%), in an alternative embodiment 2.4 to 2.75 mm (each ± 10%), and in another embodiment, 2.40 to 2.60 mm (each ± 10%). Minimum wall thicknesses of 2.25 to 2.50 mm (each ± 10%) may also be manufactured.

The present invention is further illustrated by the following non-limiting examples.

### EXAMPLES

In the first example, a typical high impact resistant polycarbonate (PC) formulation was made and is shown in table 1 column 1. Two beneficial properties of this formulation are toughness and good moldability. The moldability is reflected by the value of MVR of 27 cm³/10min, measured at 300 °C/2.16 kg. The toughness is reflected not only by the high values of izod impact strength, un-notched and notched, but also by passing a customized impact test. This test includes the steps of dropping on a molded plaque, from a height of 2.15m, a metallic sphere, having a weigh of 0.5 kg, a diameter of 50 mm. The plaque has the dimensions of 200x200x4 mm. The material, of which the plaque is made, passes the test if no fracture or breakage is observed.

It is difficult to obtain a material that shows the same level of toughness of formulation 1 in table 1, but that is also flame resistant (i.e. it has a UL 94 rating of V-0 at 3 mm thickness) and that also complies with regulations that restrict the use of bromine and chlorine. Several commercial PC glass-reinforced materials such as, for example, Makrolon 8345, PANLITE GN3600, and XANTAR G6F are UL-94 V-0 at 3 mm, but they do not pass the drop ball toughness test mentioned above. Also the formulation 4 in table 1, based on PC and 30% of glass, rated V-0 at 3.00 and bromine and chlorine free - does not pass the drop ball test described above. Indeed, this formulation presents significantly lower values of izod- impact-strength, both un-notched and notched, than the formulation number 1 in table 1, resulting in a lower toughness.

One way to reduce flammability of the formulation number 1 in table 1, might be to use the flame retardant package that is present in the formulation number 4 in table 1, This flame retardant package contains RM salt, PTFE and talc. However talc has a negative effect on toughness, as it can be proven comparing notched and un-notched impact values of formulation 4 and 1 in Table 1. Formulation 2 in Table 1, showed that the addition of 0.05 % of RM salt, and 0.5 % of PTFE did not consistently improve the UL 94 flammability rating of the formulation, which remained V-1 at 3 mm, even if the level of izod impact strength, both un-notched and notched, remained basically the same. It was also apparent that MVR (300 C /2.16 kg) of formulation in column 2 is 7.3 cm³/10min lower than the formulation reported in column 1 of table 1, due to the addition of RM salt and PTFE. Indeed, PTFE and RM were both known to increase the viscosity and therefore to reduce the moldability. For this reason the percentage that can be added of these two ingredients is limited if good moldability is desired.

The flammability rating of formulation 2 in Table 1 was improved when 0.25% of carbon black was added in form of masterbatch (which contained 50% CB and 50% EVA). In fact, the formulation in column 3 of Table 1 was basically similar to formulation 2 of Table 1, with the only difference that 0.50% of carbon black masterbatch was added. The presence of CB masterbatch resulted in a significant improvement of the UL-94 rating, from V-1 at 3 mm, in formulation 2, to V-0 at 3 mm in formulation 3 Table 1. This result showed that there was a synergism between CB and the salts of sulfonic acid and PTFE. The presence of CB combined with salts of sulfonic acids and PTFE permitted to obtain a final compound that had at the same time robust and consistent V0 rating at 3 mm thickness, improved impact resistance and good moldability. It was worth noting that these results were surprising. Initially, the addition of CB masterbatch was intended to give black color to the formulation reported in column 3 of Table 1. It is also important noting that the formulation 3 of Table 1 passed the drop ball test described above. The detailed flame times of the formulations, 1 to 4 reported in Table 1, and tested using Underwriters Laboratory UL 94 test method, are given in Table 2. Twenty bars were tested instead of usual five bars. The data were analyzed using a statistical method to convert flame time data and number of observed drips to a prediction of the probability of the first time pass, or p(FTP), that a particular sample formulation would achieve a V0 "pass" rating in the conventional UL94 testing of 5 bars. p(FTP) will be as close to 1 as possible for maximum flame-retardant performance in UL testing. Note that no drips were observed during the UL test of the four formulations reported in Table 2. Comparing the data of the formulations 1 and 2, reported in Table 2, with the corresponding data relative to formulation 3, it is apparent that the latter one, which contains at the same time CB, RM salt and PTFE, is a robust and consistent V0, with p(FTP) equal to 1.00 and consisted V0 rating across all the 20 specimens tested. Formulation 1, which contained only CB, and formulation 2, which contained only RM salt and encapsulated PTFE have shown a p(FTP) of 0.701 and 0.018 respectively and inconsistent V0 rating across all 20 specimens tested.

Increasing the amount carbon black can improve further the flammability properties of the compound. By comparing formulation number 2 and 3 in Table 3, it can be seen that formulation 2, which contained 0.5% of CB masterbatch, was only V-1 at 1.5 mm, while formulation 3, which contained 1.5% of the CB masterbatch was V-0 at 1.5 mm. The detailed flame times of the formulations, 1 to 3 reported in Table 3, and tested using Underwriters Laboratory UL 94 test method, are given in Table 4. Twenty bars, having thickness of 1.5 mm, were tested instead of usual five bars. As explained above for Table 2, the data were analyzed using a statistical method to convert flame time data and number of observed drips to a prediction of the probability of the first time pass, or p(FTP), that a particular sample formulation would achieve a V0 "pass" rating in the conventional UL94 testing of 5 bars. Preferably p(FTP) will be as close to 1 as possible for maximum flame-retardant performance in UL testing. Note that no drips were observed during the UL test of the four formulations reported in Table 4.

It is also worth noting that the synergistic effect showed above was valid also when the type of carbon black is changed. In fact PLASBLAK EV 1755 BLK and PVB125 are two different commercial masterbatches, sold as black colorant, both containing 50% of CB and 50 of EVA. However, the average dimensions of CB particle size is different: the average CB particle size of PVB 125 is 20 nm, while the average particle size of PLASBLAK EV 1755 BLK is 60 nm. UL 94 performance was substantially equivalent as may be seen comparing formulation 1 and 2 reported in Table 3.

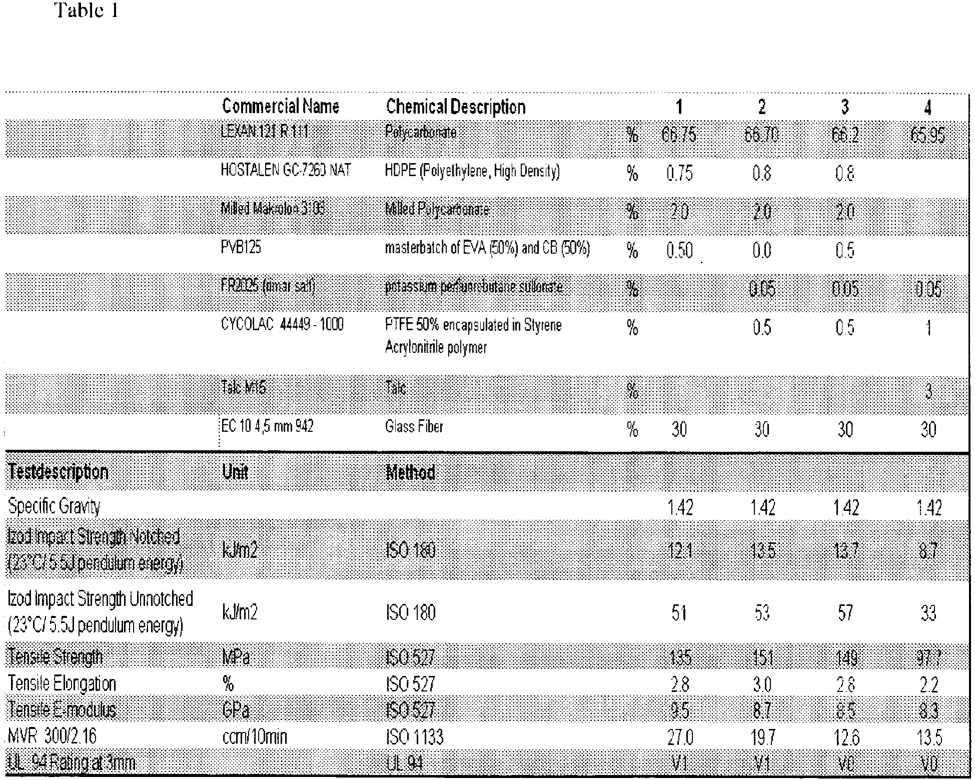

**Table 2**

| | 1 | | 2 | | 3 | | 4 | |
|---|---|---|---|---|---|---|---|---|
| p(FTP) V0 at 3mm | 0.701 | | 0.018 | | 1.00 | | 0.99 | |
| | t1 (sec.) | t2 (sec.) | t1 (sec.) | t2 (sec.) | t1 (sec.) | t2 (sec.) | t1 (sec.) | t2 (sec.) |
| | 4 | 4 | 2 | 12 | 1 | 5 | 2 | 3 |
| | 1 | 7 | 2 | 6 | 1 | 3 | 1 | 1 |
| | 2 | 4 | 2 | 9 | 2 | 3 | 2 | 1 |
| | 2 | 11 | 3 | 11 | 1 | 3 | 1 | 3 |
| | 1 | 5 | 1 | 5 | 3 | 3 | 1 | 2 |
| | 2 | 6 | 2 | 9 | 3 | 3 | 2 | 2 |
| | 1 | 6 | 2 | 2 | 2 | 6 | 3 | 4 |
| | 2 | 9 | 2 | 14 | 1 | 3 | 1 | 3 |
| | 1 | 7 | 1 | 14 | 2 | 3 | 1 | 2 |
| | 2 | 11 | 2 | 12 | 1 | 4 | 1 | 4 |
| | 1 | 2 | 2 | 3 | 3 | 2 | 1 | 4 |
| | 1 | 3 | 3 | 17 | 2 | 3 | 1 | 2 |
| | 1 | 3 | 2 | 7 | 1 | 2 | 2 | 2 |
| | 3 | 2 | 3 | 16 | 2 | 2 | 2 | 4 |
| | 2 | 3 | 1 | 10 | 1 | 2 | 1 | 2 |
| | 1 | 3 | 1 | 4 | 2 | 2 | 2 | 4 |
| | 2 | 3 | 1 | 12 | 1 | 4 | 1 | 5 |
| | 1 | 4 | 2 | 15 | 1 | 4 | 2 | 2 |
| | 2 | 5 | 2 | 10 | 1 | 3 | 1 | 4 |
| | 3 | 6 | 3 | 7 | 1 | 4 | 1 | 1 |

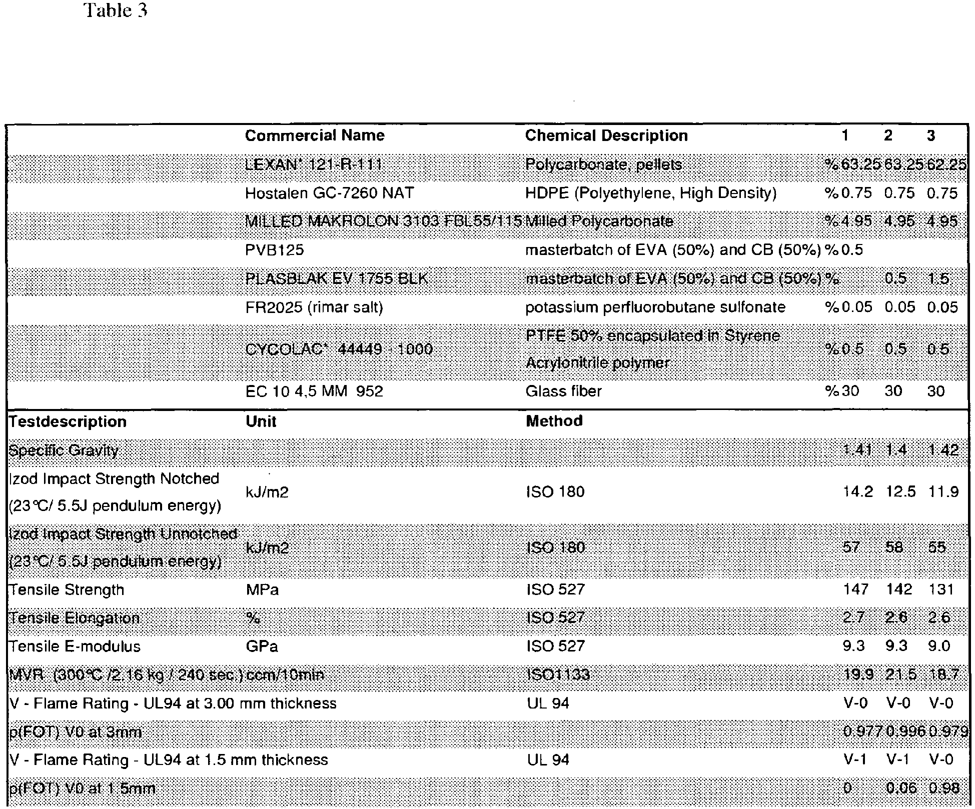

**Table 4**

| | 1 | | 2 | | 3 | |
|---|---|---|---|---|---|---|
| p(FTP) V0 at 1.5mm | 0.00 | | 0.06 | | 0.98 | |
| | t1 (sec.) | t2 (sec.) | t1 (sec.) | t2 (sec.) | t1 (sec.) | t2 (sec.) |
| | 7 | 15 | 3 | 4 | 4 | 6 |
| | 4 | 5 | 4 | 5 | 2 | 5 |
| | 4 | 12 | 3 | 10 | 2 | 7 |
| | 3 | 13 | 3 | 7 | 3 | 7 |
| | 4 | 18 | 6 | 10 | 2 | 6 |
| | 7 | 12 | 3 | 10 | 2 | 4 |
| | 5 | 8 | 3 | 2 | 2 | 5 |
| | 5 | 15 | 3 | 9 | 3 | 6 |
| | 3 | 13 | 5 | 6 | 2 | 9 |
| | 4 | 16 | 4 | 11 | 3 | 5 |
| | 3 | 8 | 3 | 5 | 3 | 5 |
| | 5 | 13 | 4 | 4 | 3 | 5 |
| | 4 | 11 | 4 | 7 | 2 | 8 |
| | 2 | 12 | 7 | 9 | 4 | 5 |
| | 5 | 19 | 6 | 12 | 3 | 5 |
| | 7 | 15 | 6 | 10 | 2 | 6 |
| | 4 | 12 | 3 | 8 | 4 | 6 |
| | 4 | 12 | 2 | 11 | 4 | 5 |
| | 3 | 6 | 5 | 8 | 3 | 7 |
| | 4 | 12 | 2 | 4 | 2 | 6 |

As can be seen from the above examples, in one embodiment, a thermoplastic composition comprises 30 to 99% by weight of a thermoplastic resin; 10% or less of a non-brominated, non-chlorinated flame retardant package that comprises a salt of sulfonic acid; and from 0.05 to 10% by weight of a carbon-containing synergist selected from carbon black, graphite, exfoliated graphite, carbon nanotubes or a combination including at least one of the foregoing carbon-containing synergists; wherein a molded sample of the thermoplastic composition is capable of achieving a flame rating of V0 at a thickness of 3.0 mm, when tested according to UL 94 standard and wherein the composition has an un-notched Izod impact strength, as measured by ISO 180 of at least 90% of an impact strength of a composition containing the thermoplastic resin, the carbon-containing synergist and no flame retardant package.

In another embodiment, a thermoplastic composition comprises 30 to 99% by weight of a thermoplastic resin; the thermoplastic resin being a polycarbonate or a polycarbonate resin blend; 10% or less of a non-brominated, non-chlorinated flame retardant package that comprises a salt of sulfonic acid; and from 0.05 to 10% by weight of a carbon-containing synergist selected from carbon black, graphite, exfoliated graphite, carbon nanotubes or a combination including at least one of the foregoing carbon-containing synergists; wherein a molded sample of the thermoplastic composition is capable of achieving a flame rating of V0 at a thickness of 3.0 mm, when tested according to UL 94 standard and wherein the composition has an un-notched Izod impact strength, as measured by ISO 180 of at least 90% of an impact strength of a composition containing the thermoplastic resin, the carbon-containing synergist and no flame retardant package.

In yet another embodiment, a thermoplastic composition comprises 30 to 99% by weight of a thermoplastic resin; the thermoplastic resin being a polycarbonate or a polycarbonate resin blend; 10% or less of a non-brominated, non-chlorinated flame retardant package that comprises a salt of sulfonic acid; and from 0.05 to 10% by weight of a carbon-containing synergist selected from carbon black, graphite, exfoliated graphite, carbon nanotubes or a combination including at least one of the foregoing carbon-containing synergists; wherein a molded sample of the thermoplastic composition is capable of achieving a flame rating of V0 at a thickness of 3.0 mm, when tested according to UL 94 standard and wherein the composition has an un-notched Izod impact strength, as measured by ISO 180 of at least 90% of an impact strength of a composition containing the thermoplastic resin, the carbon-containing synergist and no flame retardant package and where the flame retardant package further comprises talc, PTFE, or a combination including both talc and PTFE.

In yet another embodiment, a thermoplastic composition comprises 30 to 99% by weight of a thermoplastic resin; 10% or less of a non-brominated, non-chlorinated flame retardant package that comprises a salt of sulfonic acid; and from 0.05 to 10% by weight of a carbon-containing synergist selected from carbon black, graphite, exfoliated graphite, carbon nanotubes or a combination including at least one of the foregoing carbon-containing synergists; wherein a molded sample of the thermoplastic composition is capable of achieving a flame rating of V0 at a thickness of 3.0 mm, when tested according to UL 94 standard and wherein the composition has an un-notched Izod impact strength, as measured by ISO 180 of at least 90% of an impact strength of a composition containing the thermoplastic resin, the carbon-containing synergist and no flame retardant package; where the thermoplastic composition further comprises from 10 to 60% by weight of a reinforcement filler.

In another embodiment, a thermoplastic composition comprises 30 to 99% by weight of a thermoplastic resin; the thermoplastic resin being a polycarbonate or a polycarbonate resin blend; 10% or less of a non-brominated, non-chlorinated flame retardant package that comprises a salt of sulfonic acid; and from 0.05 to 10% by weight of a carbon-containing synergist selected from carbon black, graphite, exfoliated graphite, carbon nanotubes or a combination including at least one of the foregoing carbon-containing synergists; wherein a molded sample of the thermoplastic composition is capable of achieving a flame rating of V0 at a thickness of 3.0 mm, when tested according to UL 94 standard and wherein the composition has an un-notched Izod impact strength, as measured by ISO 180 of at least 90% of an impact strength of a composition containing the thermoplastic resin, the carbon-containing synergist and no flame retardant package; where the thermoplastic composition further comprises from 10 to 60% by weight of a reinforcement filler.

In yet another embodiment, a thermoplastic composition comprises 30 to 99% by weight of a thermoplastic resin; 10% or less of a non-brominated, non-chlorinated flame retardant package that comprises a salt of sulfonic acid; and from 0.05 to 10% by weight of a carbon-containing synergist selected from carbon black, graphite, exfoliated graphite, carbon nanotubes or a combination including at least one of the foregoing carbon-containing synergists; wherein a molded sample of the thermoplastic composition is capable of achieving a flame rating of V0 at a thickness of 3.0 mm, when tested according to UL 94 standard and wherein the composition has an un-notched Izod impact strength, as measured by ISO 180 of at least 10% of an impact strength of a composition containing the thermoplastic resin, the carbon-containing synergist and no flame retardant package; where the thermoplastic composition further comprises from 10 to 60% by weight of a reinforcement filler; and where the reinforcement tiller is selected from glass fibers, calcinated clay, talc, wollastonite, barium sulfate, mica, barium titanate, silicates, zeolites, silicas, glass powders, glass-ceramic powders, magnesium hydroxide, hydrotalcites, magnesium carbonates, zinc oxide, zinc stannate, zinchydroxystannate, zinc phosphate, zinc borate, zinc sulfide, aluminium phosphate, red phosphorous, metal carborates of Be, Ca, Sr, Ba and Ra, or a combination including at least one of the foregoing reinforcing fillers.

In another embodiment, a thermoplastic composition comprises 30 to 99% by weight of a thermoplastic resin; the thermoplastic resin being a polycarbonate or a polycarbonate resin blend; 10% or less of a non-brominated, non-chlorinated flame retardant package that comprises a salt of sulfonic acid; and from 0.05 to 10% by weight of a carbon-containing synergist selected from carbon black, graphite, exfoliated graphite, carbon nanotubes or a combination including at least one of the foregoing carbon-containing synergists; wherein a molded sample of the thermoplastic composition is capable of achieving a flame rating of V0 at a thickness of 3.0 mm, when tested according to UL 94 standard and wherein the composition has an un-notched Izod impact strength, as measured by ISO 180 of at least 90% of an impact strength of a composition containing the thermoplastic resin, the carbon-containing synergist and no flame retardant package; where the thermoplastic composition further comprises from 10 to 60% by weight of a reinforcement filler; and where the reinforcement filler is selected from glass fibers, calcinated clay, talc, wollastonite, barium sulfate, mica, barium titanate, silicates, zeolites, silicas, glass powders, glass-ceramic powders, magnesium hydroxide, hydrotalcites, magnesium carbonates, zinc oxide, zinc stannate, zinchydroxystannate, zinc phosphate, zinc borate, zinc sulfide, aluminium phosphate, red phosphorous, metal carborates of Be, Ca, Sr, Ba and Ra, or a combination including at least one of the foregoing reinforcing fillers.

In one embodiment, a method of forming a thermoplastic composition comprises the steps of blending 30 to 99% by weight of a thermoplastic resin; 10% or less of a non-brominated, non-chlorinated flame retardant package that comprises a salt of sulfonic acid; and from 0.05 to 10% by weight of a carbon-containing synergist selected from carbon black, graphite, exfoliated graphite, carbon nanotubes or a combination including at least one of the foregoing carbon-containing synergists; wherein a molded sample of the thermoplastic composition is capable of achieving a flame rating of V0 at a thickness of 3.0 mm, when tested according to UL 94 standard and wherein the composition has an unotched Izod impact strength, as measured by ISO 180, of at least 90% of an impact strength of a composition containing the thermoplastic resin, the carbon-containing synergist and no flame retardant package.

In another embodiment, a method of forming a thermoplastic composition comprises the steps of blending 30 to 99% by weight of a thermoplastic resin; the thermoplastic resin being selected from polycarbonate or a polycarbonate resin blend; 10% or less of a non-brominated, non-chlorinated flame retardant package that comprises a salt of sulfonic acid; and from 0.05 to 10% by weight of a carbon-containing synergist selected from carbon black, graphite, exfoliated graphite, carbon nanotubes or a combination including at least one of the foregoing carbon-containing synergists; wherein a molded sample of the thermoplastic composition is capable of achieving a flame rating of V0 at a thickness of 3.0 mm, when tested according to UL 94 standard and wherein the composition has an unotched Izod impact strength, as measured by ISO 180, of at least 90% of an impact strength of a composition containing the thermoplastic resin, the carbon-containing synergist and no flame retardant package.

In another embodiment, a method of forming a thermoplastic composition comprises the steps of blending 30 to 99% by weight of a thermoplastic resin; 10% or less of a non-brominated, non-chlorinated flame retardant package that comprises a salt of sulfonic acid; and from 0.05 to 10% by weight of a carbon-containing synergist selected from carbon black, graphite, exfoliated graphite, carbon nanotubes or a combination including at least one of the foregoing carbon-containing synergists; wherein a molded sample of the thermoplastic composition is capable of achieving a flame rating of V0 at a thickness of 3.0 mm, when tested according to UL 94 standard and wherein the composition has an unotched Izod impact strength, as measured by ISO 180, of at least 90% of an impact strength of a composition containing the thermoplastic resin, the carbon-containing synergist and no flame retardant package; where the flame retardant package further comprises talc, PTFE, or a combination including both talc and PTFE.

In yet another embodiment, a method of forming a thermoplastic composition comprises the steps of blending 30 to 99% by weight of a thermoplastic resin; the thermoplastic resin being selected from polycarbonate or a polycarbonate resin blend; 10% or less of a non-brominated, non-chlorinated flame retardant package that comprises a salt of sulfonic acid; and from 0.05 to 10% by weight of a carbon-containing synergist selected from carbon black, graphite, exfoliated graphite, carbon nanotubes or a combination including at least one of the foregoing carbon-containing synergists; wherein a molded sample of the thermoplastic composition is capable of achieving a flame rating of V0 at a thickness of 3.0 mm, when tested according to UL 94 standard and wherein the composition has an unotched Izod impact strength, as measured by ISO 180, of at least 90% of an impact strength of a composition containing the thermoplastic resin, the carbon-containing synergist and no flame retardant package; where the flame retardant package further comprises talc, PTFE, or a combination including both talc and PTFE.

In another embodiment, a method of forming a thermoplastic composition comprises the steps of blending 30 to 99% by weight of a thermoplastic resin; 10% or less of a non-brominated, non-chlorinated flame retardant package that comprises a salt of sulfonic acid; and from 0.05 to 10% by weight of a carbon-containing synergist selected from carbon black, graphite, exfoliated graphite, carbon nanotubes or a combination including at least one of the foregoing carbon-containing synergists; wherein a molded sample of the thermoplastic composition is capable of achieving a flame rating of V0 at a thickness of 3.0 mm, when tested according to UL 94 standard and wherein the composition has an unotched Izod impact strength, as measured by ISO 180, of at least 90% of an impact strength of a composition containing the thermoplastic resin, the carbon-containing synergist and no flame retardant package; where the thermoplastic composition further comprises further comprising from 10 to 60% by weight of a reinforcement filler.

In another embodiment, a method of forming a thermoplastic composition comprises the steps of blending 30 to 99% by weight of a thermoplastic resin; the thermoplastic resin being selected from polycarbonate or a polycarbonate resin blend; 10% or less of a non-brominated, non-chlorinated flame retardant package that comprises a salt of sulfonic acid; and from 0.05 to 10% by weight of a carbon-containing synergist selected from carbon black, graphite, exfoliated graphite, carbon nanotubes or a combination including at least one of the foregoing carbon-containing synergists; wherein a molded sample of the thermoplastic composition is capable of achieving a flame rating of V0 at a thickness of 3.0 mm, when tested according to UL 94 standard and wherein the composition has an unotched Izod impact strength, as measured by ISO 180, of at least 90% of an impact strength of a composition containing the thermoplastic resin, the carbon-containing synergist and no flame retardant package; where the thermoplastic composition further comprises further comprising from 10 to 60% by weight of a reinforcement filler.

In one embodiment, a method of forming a thermoplastic composition comprises the steps of blending 30 to 99% by weight of a thermoplastic resin; 10% or less of a non-brominated, non-chlorinated flame retardant package that comprises a salt of sulfonic acid; and from 0.05 to 10% by weight of a carbon-containing synergist selected from carbon black, graphite, exfoliated graphite, carbon nanotubes or a combination including at least one of the foregoing carbon-containing synergists; wherein a molded sample of the thermoplastic composition is capable of achieving a flame rating of V0 at a thickness of 3.0 mm, when tested according to UL 94 standard and wherein the composition has an unotched Izod impact strength, as measured by ISO 180, of at least 90% of an impact strength of a composition containing the thermoplastic resin, the carbon-containing synergist and no flame retardant package; wherein the reinforcement filler is selected from glass fibers, calcinated clay, talc, wollastonite, barium sulfate, mica, barium titanate, silicates, zeolites, silicas, glass powders, glass-ceramic powders, magnesium hydroxide, hydrotalcites, magnesium carbonates, zinc oxide, zinc stannate, zinchydroxystannate, zinc phosphate, zinc borate, zinc sulfide, aluminium phosphate, red phosphorous, metal carborates of Be, Ca, Sr, Ba and Ra, or a combination including at least one of the foregoing reinforcing fillers.

In another embodiment, a method of forming a thermoplastic composition comprises the steps of blending 30 to 99% by weight of a thermoplastic resin; the thermoplastic resin being selected from polycarbonate or a polycarbonate resin blend; 10% or less of a non-brominated, non-chlorinated flame retardant package that comprises a salt of sulfonic acid; and from 0.05 to 10% by weight of a carbon-containing synergist selected from carbon black, graphite, exfoliated graphite, carbon nanotubes or a combination including at least one of the foregoing carbon-containing synergists; wherein a molded sample of the thermoplastic composition is capable of achieving a flame rating of V0 at a thickness of 3.0 mm, when tested according to UL 94 standard and wherein the composition has an unotched Izod impact strength, as measured by ISO 180, of at least 90% of an impact strength of a composition containing the thermoplastic resin, the carbon-containing synergist and no flame retardant package; wherein the reinforcement filler is selected from glass fibers, calcinated clay, talc, wollastonite, barium sulfate, mica, barium titanate, silicates, zeolites, silicas, glass powders, glass-ceramic powders, magnesium hydroxide, hydrotalcites, magnesium carbonates, zinc oxide, zinc stannate, zinchydroxystannate, zinc phosphate, zinc borate, zinc sulfide, aluminium phosphate, red phosphorous, metal carborates of Be, Ca, Sr, Ba and Ra, or a combination including at least one of the foregoing reinforcing fillers.

## Claims

1. A thermoplastic composition, comprising:
a) 30 to 99% by weight of a thermoplastic resin;
b) 0.01 to 10% by weight of a non-brominated, non-chlorinated flame retardant package that comprises a salt of sulfonic acid and at least one of talc, PTFE or a combination comprising talc and PTFE; and
c) 0.05 to 3% by weight of a carbon-containing synergist selected from carbon black, carbon nanotubes, graphite or exfoliated graphite, or a combination including at least one of the foregoing carbon-containing synergists;
wherein a molded sample of the thermoplastic composition is capable of achieving a flame rating of V0 at a thickness of 3.0 mm, when tested according to UL 94 standard.

2. The thermoplastic composition of claim 1, wherein the composition has an unotched Izod impact strength, as measured by ISO 180 of at least 90% of an impact strength of a composition containing the thermoplastic resin, the carbon-containing synergist and no flame retardant package.

3. The thermoplastic composition of any one of claims 1 or 2, wherein the thermoplastic resin is selected from polycarbonate or a polycarbonate resin blend.

4. The thermoplastic composition any one of claims 1 or 2, further comprising from 10 to 60% by weight of a reinforcement filler, wherein the reinforcement filler is selected from glass fibers, calcinated clay, wollastonite, barium sulfate, mica, barium titanate, silicates, zeolites, silicas, glass powders, glass-ceramic powders, magnesium hydroxide, hydrotalcites, magnesium carbonates, zinc oxide, zinc stannate, zinchydroxystannate, zinc phosphate, zinc borate, zinc sulfide, aluminium phosphate, red phosphorous, metal carborates of Be, Ca, Sr, Ba and Ra, or a combination including at least one of the foregoing reinforcing fillers.

5. An article of manufacture comprising the composition of any one of claims 1-4.

6. A method of forming a thermoplastic composition according to claim 1, the method comprising the steps of:
blending
a) 30 to 99% by weight of a thermoplastic resin;
b) 0.01 to 10% by weight of a non-brominated, non-chlorinated flame retardant package that comprises a salt of sulfonic acid and at least one of talc, polytetrafluoroethylene or a combination comprising talc and polytetrafluoroethylene; and
c) 0.05 to 3% by weight of a carbon-containing synergist selected from carbon black, carbon nanotubes, graphite or exfoliated graphite, or a combination including at least one of the foregoing carbon-containing synergists;
wherein a molded sample of the thermoplastic composition is capable of achieving a flame rating of V0 at a thickness of 3.0 mm, when tested according to UL 94 standard.

7. The method of claim 6, wherein the composition has an unotched Izod impact strength, as measured by ISO 180, of at least 90% of an impact strength of a composition containing the thermoplastic resin, the carbon-containing synergist and no flame retardant package.

8. The method of any one of claims 6 or 7, wherein the thermoplastic resin is selected from polycarbonate or a polycarbonate resin blend.

9. The method of any one of claims 6 or 7, further comprising from 10 to 60% by weight of a reinforcement filler, wherein the reinforcement filler is selected from glass fibers, calcinated clay, wollastonite, barium sulfate, mica, barium titanate, silicates, zeolites, silicas, glass powders, glass-ceramic powders, magnesium hydroxide, hydrotalcites, magnesium carbonates, zinc oxide, zinc stannate, zinchydroxystannate, zinc phosphate, zinc borate, zinc sulfide, aluminium phosphate, red phosphorous, metal carborates of Be, Ca, Sr, Ba and Ra, or a combination including at least one of the foregoing reinforcing fillers.

10. The method of claim 6, wherein the carbon-containing synergist is carbon black and the carbon black is added as part of a masterbatch.

## Patentansprüche

1. Thermoplastische Zusammensetzung, umfassend:
a) 30 bis 99 Gew.-% eines thermoplastischen Harzes;
b) 0,01 bis 10 Gew.-% eines nicht-bromierten, nicht-chlorierten Flammschutzpakets, das ein Salz von Sulfonsäure und zumindest eines von Talk, PTFE oder einer Kombination, die Talk und PTFE umfasst, umfasst; und
c) 0,05 bis 3 Gew.-% eines kohlenstoffhaltigen Synergisten, ausgewählt aus Ruß, Kohlenstoffnanoröhrchen, Graphit oder expandiertem Graphit oder einer Kombination, die zumindest einen der vorstehenden kohlenstoffhaltigen Synergisten umfasst;
wobei eine geformte Probe der thermoplastischen Zusammensetzung in der Lage ist, eine Brennbarkeitsbewertung von V0 bei einer Dicke von 3,0 mm zu erzielen, wenn gemäß UL94-Standard getestet.

2. Thermoplastische Zusammensetzung nach Anspruch 1, wobei die Zusammensetzung eine ungekerbte Izod-Schlagzähigkeit, gemessen gemäß ISO 180, von zumindest 90 % einer Schlagzähigkeit einer Zusammensetzung aufweist, die das thermoplastische Harz, den kohlenstoffhaltigen Synergisten und kein Flammschutzpaket enthält.

3. Thermoplastische Zusammensetzung nach einem der Ansprüche 1 oder 2, wobei das thermoplastische Harz aus Polycarbonat oder einer Polycarbonatharzmischung ausgewählt ist.

4. Thermoplastische Zusammensetzung nach einem der Ansprüche 1 oder 2, ferner umfassend 10 bis 60 Gew.-% eines Verstärkungsfüllstoffs, wobei der Verstärkungsfüllstoff aus Glasfasern, kalziniertem Lehm, Wollastonit, Bariumsulfat, Glimmer, Bariumtitanat, Silikaten, Zeoliten, Kieselerden, Glaspulvern, Glaskeramikpulvern, Magnesiumhydroxid, Hydrotalciten, Magnesiumcarbonaten, Zinkoxid, Zinkstannat, Zinkhydroxystannat, Zinkphosphat, Zinkborat, Zinksulfid, Aluminiumphosphat, rotem Phosphor, Metallcarbonaten von Be, Ca, Sr, Ba und Ra oder einer Kombination davon, die zumindest einen der vorstehenden Verstärkungsfüller enthält, ausgewählt ist.

5. Fertigungsartikel, umfassend die Zusammensetzung nach einem der Ansprüche 1 bis 4.

6. Verfahren zum Bilden einer thermoplastischen Zusammensetzung nach Anspruch 1, wobei das Verfahren die folgenden Schritte umfasst:
Vermischen
a) 30 bis 99 Gew.-% eines thermoplastischen Harzes;
b) 0,01 bis 10 Gew.-% eines nicht-bromierten, nicht-chlorierten Flammschutzpakets, das ein Salz von Sulfonsäure und zumindest eines von Talk, Polytetrafluoretyhlen oder einer Kombination, die Talk und Polytetrafluorethylen umfasst, umfasst; und
c) 0,05 bis 3 Gew.-% eines kohlenstoffhaltigen Synergisten, ausgewählt aus Ruß, Kohlenstoffnanoröhrchen, Graphit oder expandiertem Graphit oder einer Kombination, die zumindest einen der vorstehenden kohlenstoffhaltigen Synergisten umfasst;
wobei eine geformte Probe der thermoplastischen Zusammensetzung in der Lage ist, eine Brennbarkeitsbewertung von V0 bei einer Dicke von 3,0 mm zu erzielen, wenn gemäß UL94-Standard getestet.

7. Verfahren nach Anspruch 6, wobei die Zusammensetzung eine ungekerbte Izod-Schlagzähigkeit, gemessen gemäß ISO 180, von zumindest 90 % einer Schlagzähigkeit einer Zusammensetzung aufweist, die das thermoplastische Harz, den kohlenstoffhaltigen Synergisten und kein Flammschutzpaket enthält.

8. Verfahren nach einem der Ansprüche 6 oder 7, wobei das thermoplastische Harz aus Polycarbonat oder einer Polycarbonatharzmischung ausgewählt ist.

9. Verfahren nach einem der Ansprüche 6 oder 7, ferner umfassend 10 bis 60 Gew.-% eines Verstärkungsfüllstoffs, wobei der Verstärkungsfüllstoff aus Glasfasern, kalziniertem Lehm, Wollastonit, Bariumsulfat, Glimmer, Bariumtitanat, Silikaten, Zeoliten, Kieselerden, Glaspulvern, Glaskeramikpulvern, Magnesiumhydroxid, Hydrotalciten, Magnesiumcarbonaten, Zinkoxid, Zinkstannat, Zinkhydroxystannat, Zinkphosphat, Zinkborat, Zinksulfid, Aluminiumphosphat, rotem Phosphor, Metallcarbonaten von Be, Ca, Sr, Ba und Ra oder einer Kombination davon, die zumindest einen der vorstehenden Verstärkungsfüller enthält, ausgewählt ist.

10. Verfahren nach Anspruch 6, wobei der kohlenstoffhaltige Synergist Ruß ist und der Ruß als Teil eines Masterbatch hinzugefügt wird.

## Revendications

1. Composition thermoplastique, comprenant :
a) 30 à 99 % en poids d'une résine thermoplastique ;
b) 0,01 à 10 % en poids d'un composé ignifugeant sans brome ni chlore qui comprend un sel d'acide sulfonique et au moins l'un parmi le talc, le PTFE ou une combinaison comprenant du talc et du PTFE ; et
c) 0,05 à 3 % en poids d'un synergiste contenant du carbone choisi parmi le noir de carbone, les nanotubes de carbone, le graphite ou le graphite exfolié, ou une combinaison comprenant au moins l'un des synergistes contenant du carbone précédents ;
dans laquelle un échantillon moulé de la composition thermoplastique est capable d'atteindre un niveau d'inflammabilité V0 à une épaisseur de 3,0 mm, lorsqu'il est testé conformément à la norme UL 94.

2. Composition thermoplastique selon la revendication 1, dans laquelle la composition a une résistance au choc Izod sans entaille, telle que mesurée selon la norme ISO 180, d'au moins 90 % de la résistance au choc d'une composition contenant la résine thermoplastique, le synergiste contenant du carbone et une quantité nulle de composé ignifugeant.

3. Composition thermoplastique selon l'une quelconque des revendications 1 ou 2, dans laquelle la résine thermoplastique est choisie parmi un polycarbonate ou un mélange de résines de polycarbonate.

4. Composition thermoplastique selon l'une quelconque des revendications 1 ou 2, comprenant en outre de 10 à 60 % en poids d'une charge de renforcement, dans laquelle la charge de renforcement est choisie parmi les fibres de verre, l'argile calcinée, la wollastonite, le sulfate de baryum, le mica, le titanate de baryum, les silicates, les zéolites, les silices, les poudres de verre, les poudres de verre-céramique, l'hydroxyde de magnésium, les hydrotalcites, les carbonates de magnésium, l'oxyde de zinc, le stannate de zinc, le zinchydroxystannate, le phosphate de zinc, le borate de zinc, le sulfure de zinc, le phosphate d'aluminium, le phosphore rouge, les carborates métalliques de Be, Ca, Sr, Ba et Ra, ou une combinaison comprenant au moins l'une des charges de renforcement précédentes.

5. Article de fabrication comprenant la composition selon l'une quelconque des revendications 1 à 4.

6. Procédé de fabrication d'une composition thermoplastique selon la revendication 1, le procédé comprenant les étapes consistant à :
mélanger
a) 30 à 99 % en poids d'une résine thermoplastique ;
b) 0,01 à 10 % en poids d'un composé ignifugeant sans brome ni chlore qui comprend un sel d'acide sulfonique et au moins l'un parmi le talc, le polytétrafluoroéthylène ou une combinaison comprenant du talc et du polytétrafluoroéthylène ; et
c) 0,05 à 3 % en poids d'un synergiste contenant du carbone choisi parmi le noir de carbone, les nanotubes de carbone, le graphite ou le graphite exfolié, ou une combinaison comprenant au moins l'un des synergistes contenant du carbone précédents ;
dans lequel un échantillon moulé de la composition thermoplastique est capable d'atteindre un niveau d'inflammabilité V0 à une épaisseur de 3,0 mm, lorsqu'il est testé conformément à la norme UL 94.

7. Procédé selon la revendication 6, dans lequel la composition a une résistance au choc Izod sans entaille, telle que mesurée selon la norme ISO 180, d'au moins 90 % de la résistance au choc d'une composition contenant la résine thermoplastique, le synergiste contenant du carbone et une quantité nulle de composé ignifugeant.

8. Procédé selon l'une quelconque des revendications 6 ou 7, dans lequel la résine thermoplastique est choisie parmi un polycarbonate ou un mélange de résines de polycarbonate.

9. Procédé selon l'une quelconque des revendications 6 ou 7, comprenant en outre de 10 à 60 % en poids d'une charge de renforcement, dans lequel la charge de renforcement est choisie parmi les fibres de verre, l'argile calcinée, la wollastonite, le sulfate de baryum, le mica, le titanate de baryum, les silicates, les zéolites, les silices, les poudres de verre, les poudres de verre-céramique, l'hydroxyde de magnésium, les hydrotalcites, les carbonates de magnésium, l'oxyde de zinc, le stannate de zinc, le zinchydroxystannate, le phosphate de zinc, le borate de zinc, le sulfure de zinc, le phosphate d'aluminium, le phosphore rouge, les carborates métalliques de Be, Ca, Sr, Ba et Ra, ou une combinaison comprenant au moins l'une des charges de renforcement précédentes.

10. Procédé selon la revendication 6, dans lequel le synergiste contenant du carbone est du noir de carbone et le noir de carbone est ajouté au sein d'un mélange maître.
